(19) Europäisches Patentamt
European Patent Office
Office européen des brevets

(11) **EP 2 910 867 B1**

(12) **EUROPÄISCHE PATENTSCHRIFT**

(45) Veröffentlichungstag und Bekanntmachung des Hinweises auf die Patenterteilung:
**04.04.2018 Patentblatt 2018/14**

(51) Int Cl.:
**F24H 8/00** *(2006.01)* **F16T 1/22** *(2006.01)*

(21) Anmeldenummer: **15155494.6**

(22) Anmeldetag: **18.02.2015**

(54) **Kondensatabscheider**

Condensate separator

Séparateur de condensat

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.02.2014 AT 501302014**

(43) Veröffentlichungstag der Anmeldung:
**26.08.2015 Patentblatt 2015/35**

(73) Patentinhaber: **Vaillant GmbH**
**42859 Remscheid (DE)**

(72) Erfinder:
• **Grabe, Jochen**
**51688 Wipperfürth (DE)**
• **Gaisbauer, Norbert**
**42799 Leichlingen (DE)**
• **Müller, Hans-Willi**
**42659 Solingen (DE)**

(74) Vertreter: **Hocker, Thomas**
**Vaillant GmbH**
**Berghauser Strasse 40**
**42859 Remscheid (DE)**

(56) Entgegenhaltungen:
GB-A- 608 200     GB-A- 1 472 221
US-A- 2 013 015     US-A- 3 993 090
US-A- 5 004 004

EP 2 910 867 B1

**Beschreibung**

Die Erfindung betrifft ein Verfahren zur Dimensionierung eines Kondensatabscheiders. Bei Heizgeräten mit Brennwertnutzung entsteht bei der Abkühlung des Abgases aus dem enthaltenen Wasserdampf Kondensat. Das Kondensat muss abgeführt werden, wobei darauf zu achten ist, dass aus der Kondensatleitung kein Abgas entweichen kann. Üblicherweise werden daher Kondensatabscheider in der Kondensatleitung eingesetzt. Typischerweise werden Kondensatabscheider eingesetzt, welche über eine Wassersäule den Kondensatablauf luftdicht verschließen, damit kein Abgas in den Aufstellungsraum entweichen kann. Bei Brennwertgeräten gemäß dem Stand der Technik herrscht hier im Betrieb Überdruck. Dementsprechend muss ein Ausblasen verhindert werden. Ferner muss vermieden werden, dass bei längeren Stillstandzeiten das Kondensat im Kondensatabscheider verdunstet, da ansonsten der Kondensatabscheider austrocknet.

Übliche Konstruktionen sind relativ hoch, da die Wassersäule so ausgelegt sein muss, dass diese durch den maximal möglichen Überdruck nicht ausgeblasen wird. Die bekannten Lösungen mit Schwimmern (Kugeln) zum Verschließen des Ein- oder Auslasses neigen dazu, im geschlossenen Zustand zu blockieren oder bei Überdruck und niedrigem Wasserstand nicht sauber zu schließen.

Aus GB 608200 A ist ein Kondensatabscheider mit einem Schwimmer bekannt. Ein mit dem Schwimmer verbundenes Rohr umschließt ein Kondensatabflußrohr und dient dabei zugleich als Führung. Der Schwimmer verschließt mittels eines zylindrischen Verschlusses bei Kondensatmangel den Kondensatabscheider. Da der Schwimmer unter bestimmten Umständen sich derart bewegen kann, dass vorgenannte Führung nicht mehr greift, gewährleistet eine äußere Führung des Schwimmers, dass der Schwimmer sich lediglich in einer Richtung bewegen kann und eine Rotation ausschließlich um die axiale Bewegungsachse möglich ist. Der Kondensatabscheider benötigt somit zwei Führungen. Im Betrieb muss der Kondensatspiegel derart hoch steigen, bis der zylindrische Verschluss nach oben steigt und somit den Abfluss freigibt.

DE 187686 C beschreibt einen Kondensatabscheider mit einem Füllgehäuse und einem darin befindlichen Schwimmer und einer damit verbundenen Dichtfläche. Der Schwimmer ist axial geführt und verfügt über eine Begrenzung des axialen Verschiebeweges. Der Schwimmer ist derartig ausgelegt, dass beim Überschreiten einer gewissen Füllhöhe der Auftrieb des Schwimmkörpers den Kondensatabscheider freigibt und Kondensat entweichen kann.

Sowohl beim aus GB 608200 A, als auch bei dem aus DE 187686 C bekannten Kondensatabscheider befindet sich der Eintritt in die Kondensatabführung unterhalb des Kondensatspiegels im Normalbetrieb, in dem Kondensat abgeführt wird. Bei geringen Kondensatflüssen ergibt sich somit durch das Öffnen und Schließen in beiden Fällen keine kontinuierliche Kondensatableitung, wie sie bei Kondensatabscheidern mit einer Kondensatsperrhöhe gegeben ist.

GB 1472221 A offenbart einen Kondensatabscheider mit einem zylindrischen Schwimmer mit zylindrischer Ausnehmung, welcher um ein Steigrohr angeordnet ist.

Dies wird gemäß den Merkmalen des unabhängigen Verfahrensanspruches durch die Methode zum Dimensionieren eines deratigen Kondensatabscheiders gelöst. Die Erfindung wird nun anhand der Figuren detailliert erläutert. Hierbei zeigen:

Figur 1: Den erfindungsgemäßen dimensionierten Kondensatabscheider im Schnitt ohne Kondensat im vertikalen Schnitt

Figur 2: Den erfindungsgemäßen dimensionierten Kondensatabscheider im horizontalen Schnitt

Figur 3: Den erfindungsgemäßen dimensionierten Kondensatabscheider im Schnitt mit Kondensat im vertikalen Schnitt

Figur 4: Den erfindungsgemäßen dimensionierten Kondensatabscheider im Schnitt mit Kondensat und geringer Druckbeaufschlagung im vertikalen Schnitt

Figur 5: Den erfindungsgemäßen dimensionierten Kondensatabscheider im Schnitt mit Kondensat und hoher Druckbeaufschlagung im vertikalen Schnitt

Figur 6: Den erfindungsgemäßen dimensionierten Kondensatabscheider im Schnitt mit Schwimmer im schwimmenden Zustand.

Die Figuren zeigen einen Kondensatabscheider 1 mit einem Kondensatbehälter 2, mit einem Kondensatzulauf 4 im oberen Bereich des Kondensatbehälters 2 sowie einem Kondensatablauf 6 im unteren Bereich des Kondensatbehälters 2. Innerhalb des Kondensatbehälters 2 erstreckt sich ein lineares Steigrohr 5 in vertikaler Richtung, das in den Kondensatablauf 6 übergeht und im Kondensatbehälter 2 mit einer Mündung 8 am oberen Rand endet. Ein Schwimmer 3 mit einer zylindrischen Ausnehmung ist innerhalb des Kondensatbehälters 2 derart angeordnet, dass er das Steigrohr 5 mit einem Spalt 9 umschließt. Im Spalt 9 befinden sich Abstandshalter 10 zur Führung. Diese Abstandshalter können außen am Steigrohr 5, innen in der zylindrischen Ausnehmung, an den Seitenwänden oder auf dem Boden des Kondensatbehälters 2 angeordnet sein. Der Schwimmer 3 verfügt auf seiner Oberseite über Anschlagbolzen 11. In der Ausnehmung des Schwimmers 3 befindet sich oben eine zur Mündung 8 korrespondierende, kegelstumpfförmige Dichtfläche 7. Die Ausnehmung des Schwimmers 3 ist kürzer als das Steigrohr 5, so dass ohne Kondensat der Schwimmer 3 auf dem Steigrohr 5 aufliegt und somit verschließt. Der Schwimmer 3 bildet in Verbindung mit dem Kondensatbehälter 2 mit Steigrohr 5 einen Kondensatabscheider mit definierter Sperrhöhe.

Statt einer kegelstumpfförmigen Dichtfläche 7 kann diese alternativ auch kugelförmig ausgebildet sein, so dass die Zentrierung einfach über die Schwerkraft in Verbindung mit der schrägen Auflagefläche erfolgt. Eine kugelförmige Ausbildung der Dichtfläche hat den Vorteil, dass auch bei einer Schiefstellung des Schwimmers die Dichtigkeit gewährleistet ist.

Die Anschlagbolzen 11 können alternativ auch an der Unterseite der oberen Wand des Kondensatbehälters 2 angeordnet sein.

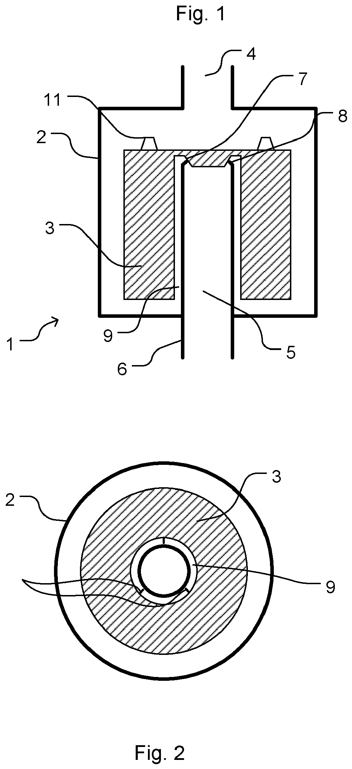

Figur 1 zeigt den Kondensatabscheider 1 ohne Kondensat. Durch die Schwerkraft verschließt der Schwimmer 3 mit seiner kegelstumpfförmigen Dichtfläche 7 die Mündung 8 des Steigrohrs 5, so dass der Kondensatabscheider 1 dicht ist und somit kein Abgas über den Kondensatablauf 6 austreten kann.

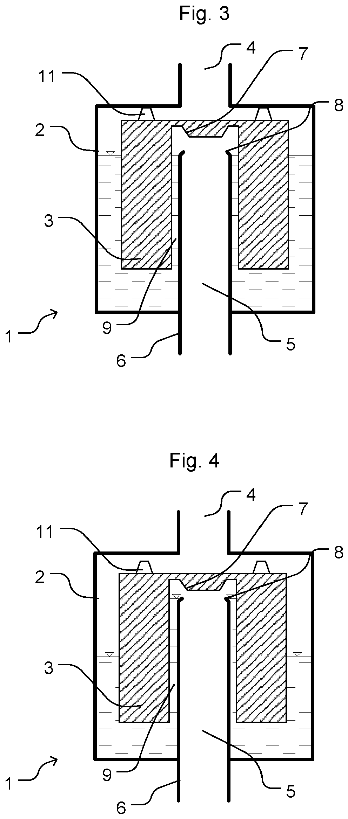

Figur 3 zeigt den mit Kondensat gefüllten Kondensatabscheider 1 ohne Druckbeaufschlagung. Das Kondensat sorgt dafür, dass der Schwimmer 3, der eine geringere Dichte aufweist als Kondensat, schwimmt und die Dichtfläche 7 die Mündung 8 des Steigrohrs 5 freigibt. Das Kondensat reicht bis zur Mündung 8 des Steigrohrs 5. Die Abstandshalter 10 sorgen dafür, dass zwischen dem Schwimmer 3 in seiner obersten Position und dem Kondensatbehälter 2 ein Strömungsweg verbleibt. Das Kondensat im Spalt 9 weist die gleiche Höhe auf wie um den Schwimmer 3 herum. Der Schwimmer 3 wird über die Anschlagbolzen 11 in Position gehalten und bildet in Verbindung mit dem Steigrohr 5 einen Kondensatabscheider mit definierter Sperrwasserhöhe.

Wird das zum Kondensatabscheider 1 dazugehörende Brennwertgerät betrieben, so herrscht im Brennwertgerät, als auch im Kondensatabscheider 1 Überdruck gegenüber der Umgebung; dies ist in Figur 4 dargestellt. Demzufolge fällt der Kondensatspiegel um den Schwimmer 3 herum, während im Spalt 9 das Kondensat immer noch bis zur Mündung 8 ragt. Fließt weiteres Kondensat durch den Kondensatzulauf 4 zu, so fließt durch den Spalt 9 Kondensat und wird über das Steigrohr 5 und den Kondensatablauf 6 abgeführt. Das Kondensat verhindert ein Entweichen des Abgases.

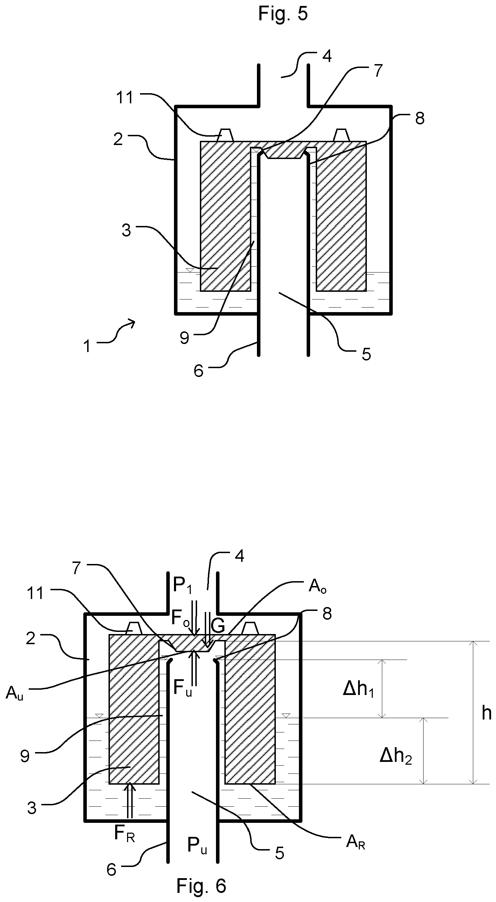

Figur 5 zeigt den erfindungsgemäß dimensionierten Kondensatabscheider 1 mit Kondensat und hoher Druckbeaufschlagung. Der Kondensatspiegel um den Schwimmer 3 herum fällt weiter, während im Spalt 9 das Kondensat immer noch bis zur Mündung 8 ragt. Der Schwimmer 3 wird vom Überdruck, der im Kondensatzulauf 4 im Vergleich zum Kondensatablauf 6 wirkt, nach unten gedrückt, so dass - wie in Figur 1 - die kegelstumpfförmige Dichtfläche 7 die Mündung 8 des Steigrohrs verschließt. Die Verschlusskraft ergibt sich im Wesentlichen aus der Druckdifferenz an der Mündung 8; so herrscht im Kondensatbehälter 2 oberhalb des Schwimmers 3 der Überdruck des Brennwertgerätes, während im Steigrohr 5 Umgebungsdruck herrscht. Dies bewirkt zusammen mit der Gewichtskraft einen Druck des Schwimmers 3 nach unten. Der Auftrieb wieder sorgt für eine Kraft nach oben. Schwimmer 3 und Steigrohr 5 sind entsprechend zu dimensionieren, dass eine entsprechende Füllmenge im Kondensatbehälter 2 für ausreichenden Auftrieb sorgt und bei einem Absinken der Füllmenge die Mündung 8 verschlossen wird. In diesem Zustand verhindern sowohl das Kondensat, als auch die Dichtfläche 7 des Schwimmers 3 ein Austreten von Abgas.

Verdunstet im Laufe der Zeit Kondensat aus dem Kondensatbehälter 2, so stellt sich eine Situation gemäß Figur 1 ein. Frisches Kondensat sammelt sich im Kondensatbehälter 2 und wird erst bei ausreichender Füllhöhe abgeführt.

Die Anschlagbolzen 11 ergeben in Verbindung mit der Länge des Steigrohrs 5 sowie der Länge der Ausnehmung des Schwimmers 3 einen Kondensatabscheider mit definierter Steig- beziehungsweise Sperrwasserhöhe.

Bei üblichem Betriebsdruck und Kondensat als Medium öffnet der Schwimmer 3 die Mündung 8 des Kondensatablaufs 6 bevor der Flüssigkeitspegel im Kondensatbehälter die Höhe der Mündung 8 erreicht. Der erfindungsgemäße Kondensatabscheider 1 ermöglicht auch einen sicheren Betrieb bei unüblich hohem Überdruck und nicht ausreichend gefülltem Kondensatabscheider. Hierzu sind Dichte und Volumen des Schwimmers 3 sowie die Länge des Steigrohres 5 entsprechend zu wählen. Dies ist in Figur 6 dargestellt.

Figur 6 zeigt die Kräfteverhältnisse im Normalbetrieb. Der Kondensatabscheider 1 wird von oben über den Kondensatzulauf 4 mit einem Druck $p_1$ beaufschlagt. Der Kondensatablauf 6 ist mit der Umgebung, in welcher Umgebungsdruck $p_u$ herrscht verbunden. Da der Druck $p_1$ größer als der Umgebungsdruck $p_u$ ist, stellt sich eine Höhendifferenz $\Delta h_1$ am Steigrohr 5 ein. Es gilt:

$$p_1 = p_U + \rho_{H2O} * g * \Delta h_1$$

Hierbei ist $\rho_{H2O}$ die Dichte des Kondensats (1 kg/l) und g die Erdbeschleunigung (9,81 m/s$^2$).

Zugleich stellt sich eine Schwimmhöhe des Schwimmers 3 ein, welche durch das Gewicht des Schwimmers und die horizontalen Flächen des Schwimmers 3, an denen entgegengesetzte Kräfte wirken, bestimmt wird. Die radialen Kräfte auf den Schwimmer 3 neutralisieren sich aufgrund des kreissymmetrischen Aufbaus.

Der Schwimmer 3 besitzt an seiner Oberseite eine Fläche $A_O$, auf welche der Druck $p_1$ von oben drückt. Hieraus resultiert eine Kraft $F_O = A_O * p_1$. Parallel zu dieser Fläche $A_O$ an der Oberseite verfügt der Schwimmer 3 über eine Fläche $A_U$ an der Unterseite der zylindrischen Ausnehmung; hierbei kann es sich auch um die projizierte Fläche handeln. Hieraus resultiert eine Kraft $F_U = A_U * p_U$. Im schwimmenden Zustand wirkt auf diese Fläche $A_U$ von unten der Umgebungsdruck $p_U$. Auf die horizontale Ringfläche $A_R$ des Schwimmers 3 im Kondensat wirkt nach unten ein Druck, der sich aus der Summe des Drucks $p_1$ und des statischen Drucks der Wassersäule $\Delta h_2$ ergibt; die horizontale Ringfläche $A_R$ ist hierbei die Fläche um die Ausnehmung des Schwimmers 3. Bei einer nicht horizontalen Ringfläche ist hier die horizontale Projektion zu verwenden. Hieraus resultiert eine Kraft $F_R = A_R * (p_1 + \rho_{H2O} * g * \Delta h_2)$. Die Wassersäule $\Delta h_2$ ist die Höhe des Eintauchens des Schwimmers 3 in den äußeren Kondensatspiegel. Ferner wirkt die Gewichtskraft G nach unten.

Es gilt:

$$A_O = A_U + A_R$$

$$G + A_O * p_1 = A_U * p_U + A_R * (p_1 + \rho_{H2O} * g * \Delta h_2)$$

Ferner gilt $A_O = A_U + A_R$ sowie $G = \rho_{Schwimmer} * V_{Schwimmer} * g$. Ist der Schwimmer aus mehreren Materialien hergestellt, beispielsweise ein Kunststoffkörper mit einem zusätzlichen Metallgewicht, so setzt sich die Gewichtskraft aus der Summe der einzelnen Gewichtskräfte zusammen.

Der Schwimmer verdrängt Kondensat des Volumens $A_R * \Delta h_2$. Somit gilt:

$$G = \rho_{Schwimmer} * V_{Schwimmer} * g = \rho_{H2O} * A_R * \Delta h_2 * g$$

Aus vorgesagtem ergibt sich

$$\Delta h_1 = (p_1 - p_U) / (\rho_{H2O} * g)$$

$$\Delta h_2 = G / (\rho_{H2O} * A_R * g) = (\rho_{Schwimmer} * V_{Schwimmer}) / (\rho_{H2O} * A_R)$$

Die zylindrische Ausnehmung muss demnach eine Mindesthöhe h aufweisen, welche größer als die Summe von $\Delta h_1$ und $\Delta h_2$ ist.

$$h > \Delta h_1 + \Delta h_2 = (p_1 - p_U) / (\rho_{H2O} * g) + G / (\rho_{H2O} * A_R * g)$$

Diese Höhe h der zylindrischen Ausnehmung darf die Länge des Steigrohres 5 nicht überschreiten, damit bei Kondensatmangel der Kondensatabscheider verschlossen ist.

Während bei den aus GB 608200 A und DE 187686 C bekannten Kondensatabscheidern der Schwimmer stets pulsiert, da die Öffnung in den Kondensatablauf unterhalb des Kondensatspiegels liegt, soll der erfindungsgemäße Kondensatabscheider 1 im Normalbetrieb (ausreichend Kondensat und kein zu hoher Überdruck auf der Eingangsseite) der Schwimmer 3 im Kondensat schwimmen und keine Unterbrechung zwischen dem Kondensatzulauf 4 und der Mündung 8 des Steigrohres 5 bestehen. Der Kondensatabscheider 1 arbeitet somit als Siphon, also als flüssigkeitsdurchlässiger Verschluss, dessen untere Umlenkung stets mit Flüssigkeit gefüllt bleibt und damit den Durchlass von Gasen verhindert.

Die Gewichtskraft G des Schwimmers 3 ist im schwimmenden Betrieb so groß wie das Gewicht des verdrängten Kondensats. Damit der Schwimmer 3 ohne Differenzdruck zwischen dem Kondensatzulauf 4 und dem Kondensatablauf 6 im Kondensat schwimmt, ohne dabei die Mündung 8 zu verschließen, muss gelten:

$$A_R * h * \rho_{H2O} * g > G$$

Bei verbrennungstechnischen Anlagen, welche Kohlenwasserstoffe $C_nH_m$ verbrennen, handelt es sich beim Kondensat um Wasser. Damit der Schwimmer 3 schwimmt, muss er eine geringere Dichte aufweisen als Wasser.

Der Kondensatabscheider 1 wird erfindungsgemäß derart an eine maximalen Druckdifferenz $\Delta p_{max}$ zwischen dem Kondensatzulauf 4 und dem Kondensatablauf 6 angepasst, dass bis zu dieser Druckdifferenz $\Delta p_{max}$ Kondensat zwischen Kondensatzulauf 4 und der Mündung 8 des Steigrohes 5 vorhanden ist. Die Höhe h der Ausnehmung des Schwimmers 3 muss kleiner als die Länge des Steigrohres 5 im Kondensatbehälter 2 sein, damit bei Kondensatmangel der Kondensatabscheider 1 verschlossen ist. Die Höhe h muss jedoch größer sein als die Summe der Höhendifferenz $\Delta h_1$ am Steigrohr 5 plus Wassersäule $\Delta h_2$, welche der Eintauchtiefe des Schwimmers 3 gegenüber dem Kondensatspiegel auf der Seite des höheren Drucks entspricht, bei maximaler Druckdifferenz $\Delta p_{max}$ entspricht. Hierbei entspricht die Höhendifferenz $\Delta h_1$ der Differenz der Höhen der Kondensatspiegel zwischen den Seiten des hohen und niedrigen Drucks. Die Höhe h der Ausnehmung muss ferner größer als der Abstand zwischen der Mündung 8 des Steigrohres 5 und dem Eintritt des Kondensatzulauf 4 in den oberen Bereich des Kondensatbehälters 2 sein, damit ein Abheben des Schwimmers 3 vor dem Anschlagen oben am Kondensatbehälter 2 ausgeschlossen ist.

Das Gewicht des Schwimmers 3 kann derart gewählt werden, dass bei gleichem Druck auf Seiten des Kondensatzulaufs 4 und Kondensatablaufs 6 der Schwimmer 3 über die Anschlagbolzen 11 oben am Kondensatbehälters 2 anschlägt. Ein mögliches Abheben des Schwimmers 3 vom Steigrohr 5 wie bei GB 608200 A wird somit verhindert.

Wird die Fläche der Mündung 8 des Steigrohrs 5 derart dimensioniert wird, dass bei der Überschreitung einer kritischen Druckdifferenz $\Delta p_{krit}$ zwischen dem Kondensatzulauf (4) und dem Kondensatablauf 6 der Schwimmer 3 den Kondensatablauf 6 verschließt, so wird auch dann ein Austritt von Gas über den Kondensatabscheider vermieden. Hierbei liegt die kritischen Druckdifferenz $\Delta p_{krit}$ oberhalb oben genannter maximaler Druckdifferenz $Ap_{max}$. Dann wirkt oberhalb der Mündungsfläche der hohe Druck, während darunter der niedrige Druck wirkt, so dass als Resultierende ein Druck nach unten wirkt. Dieser wirkt der Auftrieb des Schwimmers 3 entgegen.

Bezugszeichenliste

1    Kondensatabscheider
2    Kondensatbehälter
3    Schwimmer
4    Kondensatzulauf
5    Steigrohr
6    Kondensatablauf
7    Dichtfläche
8    Mündung
9    Spalt
10   Abstandshalter
11   Anschlagbolzen

**Patentansprüche**

**1.** Verfahren zur Dimensionierung eines Kondensatabscheiders (1) mit einem Kondensatbehälter (2), mit einem Kondensatzulauf (4) im oberen Bereich des Kondensatbehälters (2), mit einem Kondensatablauf (6) im unteren Bereich des Kondensatbehälters (2), einem innerhalb des Kondensatbehälters (2) sich im wesentlichen linear erstreckenden Steigrohr (5), das in den Kondensatablauf (6) übergeht und im Kondensatbehälter (2) mit einer Mündung (8) endet, mit einem Schwimmer (3) innerhalb des Kondensatbehälters (2), wobei sich der Schwimmer (3) zwischen einer oberen und einer unteren Position bewegen kann, wobei der Schwimmer (3) eine Ausnehmung aufweist, wobei die Ausnehmung das Steigrohr (5) mit einem Spalt (9) umschließt, der Schwimmer (3) oberhalb der Ausnehmung verschlossen ist und über eine zur Mündung (8) korrespondierende Dichtfläche (7) verfügt, an eine maximalen Druckdifferenz $\Delta p_{max}$ zwischen dem Kondensatzulauf (4) und dem Kondensatablauf (6), **dadurch gekennzeichnet, dass**
die Höhe h der Ausnehmung kleiner ist als die Länge des Steigrohres (5) im Kondensatbehälter (2), jedoch größer als die Summe der Höhendifferenz $\Delta h_1$ am Steigrohr (5) plus Wassersäule $\Delta h_2$, welche der Eintauch-tiefe des Schwimmers (3) gegenüber dem Kondensatspiegel auf der Seite des höheren Drucks entspricht, bei maximaler Druckdifferenz $\Delta p_{max}$ ist, wobei die Höhendifferenz $\Delta h_1$ der Differenz der Höhen der Kondensatspiegel zwischen den Seiten des hohen und niedrigen Drucks entspricht, und die Höhe h der Ausnehmung größer ist als der Abstand zwischen der Mündung (8) des Steigrohres (5) und dem Eintritt des Kondensatzulauf (4) in den oberen Bereich des Kondensatbehälters (2), wobei $\Delta h1$ nach der Formel $\Delta h_1 = (p_1 - p_U)\,(\rho_{H2O}{}^*g)$ und $\Delta h_2$ nach der Formel $\Delta h_2 = (\rho_{Scwimmer}{}^* V_{Scwimmer})/(\rho_{H2O}{}^* A_R)$ berechnet werden und wobei $A_R$ die horizontale Ringfläche um die Ausneh-

mung des Schwimmers (3), $\rho_{H2O}$ die Dichte des Kondensats, g die Erdbeschleunigung, $p_1$ der Druck über den Kondensatzulauf (4), $p_U$ der Druck im Kondensatablauf, $\rho_{Scwimmer}$ die Dichte des Schwimmers, $V_{Scwimmer}$ das Volumen des Schwimmers ist

**2.** Verfahren zur Dimensionierung eines Kondensatabscheiders (1) nach Anspruch 1 mit Anschlagbolzen (11) an seiner Oberseite des Schwimmers (3) oder der Unterseite des Kondensatbehälters (2), **dadurch gekennzeichnet, dass** das Gewicht des Schwimmers (3) derart gewählt ist, dass bei gefülltem Kondensatbehälter (2) und gleichem Druck auf Seiten des Kondensatzulaufs (4) und Kondensatablaufs (6) der Schwimmer (3) über die Anschlagbolzen (11) oben am Kondensatbehälters (2) anschlägt.

**3.** Verfahren zur Dimensionierung eines Kondensatabscheiders (1) nach Anspruch 2 oder 3, **dadurch gekennzeichnet, dass** die Fläche der Mündung (8) des Steigrohrs (5) derart dimensioniert wird, dass bei der Überschreitung einer kritischen Druckdifferenz $\Delta p_{krit}$ zwischen dem Kondensatzulauf (4) und dem Kondensatablauf (6) der Schwimmer (3) das Steigrohr (5) verschließt.

**4.** Verfahren zur Dimensionierung eines Kondensatabscheiders (1) nach einem der Ansprüche 1 bis 3, **dadurch gekennzeichnet, dass** die Masse des Schwimmers (3) kleiner als das Produkt aus der horizontalen Ringfläche $A_R$ um die Ausnehmung des Schwimmers (3) multipliziert mit der Höhe h der Ausnehmung sowie der Dichte des Kondensats ist.

**Claims**

**1.** Method for dimensioning a condensate separator (1) having a condensate container (2), having a condensate inlet (4) in the upper region of the condensate container (2), having a condensate outlet (6) in the lower region of the condensate container (2), a riser pipe (5) extending substantially linearly within the condensate container (2), said riser pipe merging into the condensate outlet (6) and ending in the condensate container (2) with a orifice (8), having a float (3) within the condensate container (2), wherein the float (3) can move between an upper and a lower position, wherein the float (3) has a recess, wherein the recess encloses the riser pipe (5) with a gap (9), the float (3) is closed above the recess and is provided with a sealing surface (7) corresponding to the orifice (8), at a maximum pressure difference $\Delta p_{max}$ between the condensate inlet (4) and the condensate outlet (6),
**characterised in that**
the height h of the recess is less than the length of the riser pipe (5) in the condensate container (2), however is greater than the sum of the height difference $\Delta h_1$ at the riser pipe (5) plus water column $\Delta h_2$, which corresponds to the immersion depth of the float (3) compared to the condensate level on the side of the higher pressure, at maximum pressure difference $\Delta p_{max}$, wherein the height difference $\Delta h_1$ corresponds to the difference in the heights of the condensate level between the sides of the high and low pressure, and the height h of the recess is greater than the distance between the orifice (8) of the riser pipe (5) and the entry of the condensate inlet (4) into the upper region of the condensate container (2), wherein $\Delta h_1$ is calculated according to the formula $\Delta h_1 = (p_1 - p_U)/(p_{H2O} * g)$ and $\Delta h_2$ is calculated according to the formula $\Delta h_2 = (p_{float} * V_{float})/(p_{H20} * A_R)$ and wherein $A_R$ is the horizontal annular area around the recess of the float (3), $p_{H20}$ is the density of the condensate, g is the gravitational acceleration, $p_1$ is the pressure over the condensate inlet (4), $p_U$ is the pressure in the condensate outlet, $p_{float}$ is the density of the float, $V_{float}$ is the volume of the float.

**2.** Method for dimensioning a condensate separator (1) according to claim 1 having stop bolts (11) on its upper side of the float (3) or the lower side of the condensate container (2), **characterised in that** the weight of the float (3) is selected in such a way that, in the case of a filled condensate container (2) and equal pressure on sides of the condensate inlet (4) and condensate outlet (6), the float (3) strikes on top of the condensate container (2) via the stop bolts (11).

**3.** Method for dimensioning a condensate separator (1) according to claim 2 or 3,
**characterised in that** the area of the orifice (8) of the riser pipe (5) is dimensioned in such a way that, in the case of exceeding a critical pressure difference $\Delta p_{crit}$ between the condensate inlet (4) and the condensate outlet (6), the float (3) closes the riser pipe (5).

**4.** Method for dimensioning a condensate separator (1) according to any one of claims 1 to 3, **characterised in that** the mass of the float (3) is less than the product of the horizontal annular area $A_R$ around the recess of the float (3) multiplied by the height h of the recess as well as the density of the condensate.

**EP 2 910 867 B1**

**Revendications**

1. Procédé de dimensionnement d'un séparateur de condensat (1) avec un récipient de condensat (2), une alimentation en condensat (4) dans la zone supérieure du récipient de condensat (2), une décharge de condensat (6) dans la zone inférieure du récipient de condensat (2), une conduite montante (5) s'étendant de manière sensiblement linéaire à l'intérieur de récipient de condensat (2), laquelle conduite montante se fond dans la décharge de condensat (6) et se termine dans le récipient de condensat (2) par une bouche (8), un flotteur (3) à l'intérieur du récipient de condensat (2), dans lequel le flotteur (3) peut se déplacer entre une position supérieure et une position inférieure, dans lequel le flotteur (3) présente une cavité, dans lequel la cavité entoure la conduite montante (5) par un intervalle (9), le flotteur (3) est fermé au-dessus de la cavité et présente une surface étanche (7) correspondant à la bouche (8), à une différence de pression maximale $\Delta p_{max}$ entre l'alimentation en condensat (4) et la décharge de condensat (6), **caractérisé en ce que** :

   la hauteur (h) de la cavité est plus petite que la longueur de la conduite montante (5) dans le récipient de condensat (2), mais est plus grande que la somme de la différence de hauteur $\Delta h_1$ sur la conduite montante (5) plus la colonne d'eau $\Delta h_2$ qui correspond à la profondeur d'immersion du flotteur (3) par rapport au niveau du condensat sur le côté de pression supérieure, à la différence de pression maximale $\Delta p_{max}$, dans lequel la différence de hauteur $\Delta h_1$ correspond à la différence des hauteurs du niveau de condensat entre les côtés de pression élevée et de pression basse, et la hauteur h de la cavité est plus grande que la distance entre la bouche (8) de la conduite montante (5) et l'entrée de l'alimentation en condensat (4) dans la zone supérieure du récipient de condensat (2), dans lequel $\Delta h_1$ est calculée selon la formule $\Delta h_1 = (p_1 - p_U)/(\rho_{H20}{}^*g)$ et $\Delta h_2$ selon la formule $\Delta h_2 = (\rho_{flotteur}{}^*V_{flotteur})/(\rho_{H20}{}^*A_R)$ et dans lequel $A_R$ est la surface annulaire horizontale autour de la cavité du flotteur (3), $\rho_{H2O}$ la densité du condensat, g l'accélération de la pesanteur, $p_1$ la pression sur l'alimentation en condensat (4), $p_U$ la pression dans la décharge de condensat, $\rho_{flotteur}$ la densité du flotteur et $V_{flotteur}$ le volume du flotteur.

2. Procédé de dimensionnement d'un séparateur de condensat (1) selon la revendication 1 avec des boulons de butée (11) sur la face supérieure du flotteur (3) ou la face inférieure du récipient de condensat (2), **caractérisé en ce que** le poids du flotteur (3) est choisi de sorte que, lorsque le récipient de condensat (2) est rempli et qu'il y a la même pression des côtés de l'alimentation en condensat (4) et de la décharge de condensat (6), le flotteur (3) s'appuie dans la partie supérieure sur le récipient de condensat (2) via les boulons de butée (11).

3. Procédé de dimensionnement d'un séparateur de condensat (1) selon la revendication 2 ou 3, **caractérisé en ce que** la surface de la bouche (8) de la conduite montante (5) est dimensionnée en sorte que, lors du dépassement d'une différence de pression critique $\Delta p_{crit}$ entre l'alimentation en condensat (4) et la décharge de condensat (6), le flotteur (3) ferme la conduite montante (5).

4. Procédé de dimensionnement d'un séparateur de condensat (1) selon l'une quelconque des revendications 1 à 3, **caractérisé en ce que** la masse du flotteur (3) est plus petite que le produit formé de la surface annulaire horizontale $A_R$ autour de la cavité du flotteur (3) multipliée par la hauteur h de la cavité ainsi que par la densité du condensat.

Fig. 1

Fig. 2

Fig. 3

Fig. 4

## Fig. 5

## Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 608200 A
- DE 187686 C
- GB 1472221 A